Europäisches Patentamt

European Patent Office

Office européen des brevets

(11) Veröffentlichungsnummer: **0 154 689**
**B1**

(12) **EUROPÄISCHE PATENTSCHRIFT**

(45) Veröffentlichungstag der Patentschrift: **02.05.90**

(51) Int. Cl.⁵: **G 02 B 6/42**

(21) Anmeldenummer: **84114582.4**

(22) Anmeldetag: **30.11.84**

(54) Vorrichtung zum lösbaren Ankoppeln eines Lichtwellenleiters an ein optoelektronisches Bauelement.

(30) Priorität: **09.02.84 DE 3404613**

(43) Veröffentlichungstag der Anmeldung:
**18.09.85 Patentblatt 85/38**

(45) Bekanntmachung des Hinweises auf die
Patenterteilung:
**02.05.90 Patentblatt 90/18**

(84) Benannte Vertragsstaaten:
**DE FR GB IT**

(56) Entgegenhaltungen:
EP-A- 90 724
EP-A- 116 481
DE-B- 2 525 132
GB-A- 2 009 440
JP-A-58 105 115

(73) Patentinhaber: **Siemens Aktiengesellschaft**
**Wittelsbacherplatz 2**
**D-8000 München 2 (DE)**

(72) Erfinder: **Fischer, Karl**
**Aschenbrennerstrasse 20**
**D-8000 München 45 (DE)**
Erfinder: **Späth, Werner, Dipl.-Phys.**
**Burgstallerstrasse 10**
**D-8150 Holzkirchen (DE)**

(56) References cited:
**IBM TECHNICAL DISCLOSURE BULLETIN, Band
23, Nr. 7B, Dezember 1980, Seiten 3104-3106,
New York, US; L. BALLIET u.a.: "Self-aligning
edge emitter for fiber optics"**
**PATENTS ABSTRACTS OF JAPAN, Band 7, Nr.
210, 16. September 1983, Seite 91 P 223; & JP -
A - 58 105 115 (FUJITSU K.K.) 22.06.1983**
**PATENTS ABSTRACTS OF JAPAN, Band 6, Nr.
104 (P-122)982r, 15. Juni 1982; & JP - A - 57 35
820 (SHIMAZU SEISAKUSHO) 26.02.1982**
**IBM TECHNICAL DISCLOSURE BULLETIN, Band
25, Nr. 4, September 1982, Seiten 2188-2189,
New York, US; L. BALLIET u.a.: "Method of
aligning optical fibers with LSI chips containing
optical light-emitting sources and/or receivers"**

(56) References cited:
**IBM TECHNICAL DISCLOSURE BULLETIN, Band
23, Nr. 10, März 1981, Seiten 4616-4617, New
York, US; G.A. RASKO: "Enclosure for electrooptical components"**

**Beschreibung**

Die Erfindung betrifft eine Vorrichtung zum gleichzeitigen Justieren und lösbaren Befestigen eines Lichtwellenleiters an ein optoelektronisches Bauelement oder einen zweiten Lichtwellenleiter, die mit einem Träger versehen sind, in den eine den Lichtwellenleiter aufnehmende V-förmige Nut derart eingebracht ist, daß die Stirnfläche des Lichtwellenleiters für optimale Lichtübertragung der aktiven Fläche des Bauelements oder der Stirnfläche des zweiten Lichtwellenleiters gegenüberliegt.

Eine derartige Vorrichtung geht aus der Zeitschrift "IBM Technical Disclosure Bulletin", Vol. 23, No. 7B, Seiten 3104 bis 3106 als bekannt hervor. Sie dient allerdings lediglich zur Selbstjustierung eines Kantenemitters für Fiberoptiken und nicht zum lösbaren Befestigen eines Lichtwellenleiters an ein optoelektronisches Bauelement oder einen anderen Lichtwellenleiter.

Außerdem ist aus der europäischen Patentschrift 0 090 724 eine Vorrichtung zum Verbinden von optischen Fasern bekannt, bei der ein Träger zur Aufnahme der zu koppelnden Fasern mit einer V-Nut versehen ist. Die in die V-Nut Ende an Ende eingelegten Fasern werden mit einer in ihrem zentralen Bereich elastischen Flanschplatte und eventuell einer weiteren Platte befestigt, und zwar durch Verschrauben der Platten mit dem Träger.

Die Ankopplung von Lichtwellenleitern an optoelektronische Bauelemente, wie beispielsweise an Sende- oder Empfangs-Bauelemente, also etwa an Leuchtdioden, PIN-Dioden oder Fototransistoren, sollte lösbare erfolgen. Das gleiche gilt auch in vielen Fällen für die Ankopplung eines Lichtwellenleiters an einen anderen Lichtwellenleiter.

Bisher werden derartige Ankopplungen von Lichtwellenleitern an optoelektronische Bauelemente mittels Stecker/Stecker-Verbindungen ausgeführt, die sich in der Praxis auch bewährt haben, zumal in der Regel nur wenige Verbindungen an einer Stelle einer Anlage auszuführen sind. Solche Stecker/Stecker-Verbindungen sind auch zum Verbinden von Lichtwellenleitern von optischen Multifiberkabeln bekannt (GB—PS 2 009 440).

Solche Stecker/Stecker-Verbindungen sind aber unzweckmäßig, wenn Lichtwellenleiter mit einer sehr großen Anzahl von Adern verwendet werden, wie dies beispielsweise im Kraftwerksbau und bei Vermittlungsstellen der Fernmeldetechnik der Fall ist. Dies ist darauf zurückzuführen, daß Stecker/Stecker-Verbindungen einen relativ großen Platzbedarf erfordern und der Arebtiszeitaufwand für die Montage beträchtlich ist. Der große Platzbedarf ist mit der angestrebten Miniaturisierung der zugehörigen Elektronik unverträglich, und der Arbeitszeitaufwand wächst proportional zu der Anzahl der Adern des Lichtwellenleiters.

Es ist daher Aufgabe der Erfindung, eine Vorrichtung zu schaffen, mit der bei geringem Platzbedarf ein auch zahlreiche Adern aufweisender Lichtwellenleiter an ein optoelektronisches Bauelement oder einen anderen Lichtwellenleiter gleichzeitig justiert und lösbar befestigt werden kann.

Diese Aufgabe wird bei einer Vorrichtung der eingangs genannten Art erfindungsgemäß dadurch gelöst, daß der Lichtwellenleiter durch zwei mit Kunststoff beschichtete und unter Federkraft gelagerte Metallteile in der Nut gehalten ist.

Bei der erfindungsgemäßen Vorrichtung sind also keine Stecker/Stecker-Verbindungen erforderlich. Dennoch kann ein Lichtwellenleiter lösbar mit einem optoelektronischen Bauelement gekoppelt werden, wobei auch eine dauerhafte Justierung zwischen der aktiven Fläche des optoelektronischen Bauelements und der Stirnfläche bzw. dem Ende des Lichtwellenleiters gewährleistet ist.

Die erfindungsgemäße Vorrichtung besteht im wesentlichen aus dem Träger, der mit der V-förmigen Nut zur genau definierten Lagerung des Lichtwellenleiters versehen ist und der außerdem das optoelektronische Bauelement so haltert, daß dessen aktive Fläche zur Stirnfläche bzw. zur Achse des Lichtwellenleiters hin ausgerichtet ist.

Bereits bei der Herstellung des Trägers können alle erforderlichen Justierarbeiten vorgenommen werden, so daß auf den Träger nur noch an definierten Stellen das optoelektronische Bauelement und in der Nut des Trägers der Lichtwellenleiter anzubringen sind. Dies bedeutet, daß beim Positionieren des Lichtwellenleiters nur noch die Toleranzen der Fasergeometrie, also die Toleranzen der einzelnen Adern, zu Abweichungen von der gewünschten Lage der Faserachse zur aktiven Fläche des optoelektronischen Bauelements führen können.

Zusätzliche Toleranzen, wie sie bei Stecker/Stecker-Verbindungen vorhanden sind, entfallen bei der erfindungsgemäßen Vorrichtung vollkommen, da keine verschiedenen Einzelteile wie bei einem Stecker und einer Steckerfassung benötigt werden.

Die bei der erfindungsgemäßen Vorrichtung zu erwartenden Abweichungen a der Faserachse von der Normallage folgen im wesentlichen der Beziehung:

$$a = \frac{\Delta D}{\sin \gamma/2 \cdot 2}$$

Mit $\gamma$=Grundwinkel der Nut, $\Delta D$=Abweichung der Faserachse.

Eine dauerhafte Halterung des in die V-förmige Nut des Trägers eingelegten Lichtwellenleiters wird durch die zwei mit Kunststoff beschichtete und unter Federkraft gelagerte Metallteile gewährleistet. Als Kunststoff ist hierfür insbesondere ein Elastomer zweckmäßig. Mit dem ersten Haltestück kann nämlich der Lichtwellenleiter zuerst in der Nut eingelegt und vorläufig justiert werden, wobei noch eine Sichtkontrolle möglich ist. Anschließend wird das zweite Haltestück eingebracht, das den Lichtwellenleiter in der Nut endgültig abdeckt und festlegt.

Die Haltestücke werden mittels Federkraft auf den in der Nut befindlichen Lichtwellenleiter angedrückt, so daß sich Temperaturänderungen usw. auch über lange Einsatzzeiten hinweg selbständig auszugleichen vermögen.

Zum Anschließen von Lichtwellenleitern an optoelektronischen Bauelementen werden die Lichtwellenleiter zuerst von ihrer Schutzhülle am Faserende befreit, und mittels eines Fasertrenngeräts wird eine einwandfreie Bruchfläche erzeugt. Selbstverständlich kann es auch zweckmäßig sein, das auf diese Weise freigelegte Ende des Lichtwellenleiter svor dem Brechen wieder mit beispielsweise einem sehr dünn aufgetragenen Schutzlack vor einer Bruchgefahr zu schützen. Vor der Verbindungstelle zwischen dem Lichtwellenleiter und dem optoelektronischen Bauelement ist dabei ein ausreichender Faservorrat vorzusehen, so daß der Lichtwellenleiter ohne Belastung an das optoelektronische Bauelement angekoppelt werden kann und die Montage erleichtert ist.

Mittels der erfindungsgemäßen Vorrichtung können auch zwei Lichtwellenleiter miteinander gekoppelt werden, indem in eine in einem Träger durchgehende V-Nut von jedem Ende aus ein Llchtwellenleiter eingelegt wird. Für jeden Lichtwellenleiter wird dann vorzugsweise wenigstens ein Haltestück vorgesehen, wobei die Verbindungsstelle zwischen den beiden Stirnflächen der beiden Lichtwellenleiter zweckmäßigerweise durch ein zusätzliches Haltestück abgedeckt und festgelegt wird.

Mittels der erfindungsgemäßen Vorrichtung ist es möglich, Lichtwellenleiter mit optoelektronischen Bauelementen jeder Art zu verbinden, wie beispielsweise mit Hybridschaltungen, integrierten elektronischen Schaltungen, Sendertreibern und Empfangsverstärken. Diese Bauelemente können gegebenenfalls auch auf nur einem Träger vereinigt sein.

Der Träger kann beispielsweise aus einem Siliciumkristall bestehen, in den die V-förmige Nut entsprechend eingeätzt iste. Zum Schutz des Lichtwellenleiters vor Beschädigungen kann dieser Siliciumkristall zumindest im Bereich der V-förmigen Nut metallisiert sein.

Die Tiefe der V-förmigen Nut kann vorzugsweise im Bereich der Koppelstelle zwischen dem Lichtwellenleiter und dem optoelektronischen Bauelement bzw. einem anderen Lichtwellenleiter dem Durchmesser der blanken Faser des Lichtwellenleiters angepaßt sein, während sonst die Tiefe etwas größer ist und dem Durchmesser der mit einer Schutzhülle umgebenen Faser entspricht.

Nachfolgend wird die Erfindung an Hand der Zeichnung näher erläutert. Es zeigen:

Fig. 1 ein erstes Ausführungsbeispiel der erfindungsgemäßen Vorrichtung in Perspektive,

Fig. 2 die Vorrichtung der Fig. 1 mit aufgelegten Haltestücken,

Fig. 3 ein abgewandeltes Ausführungsbeispiel der erfindungsgemäßen Vorrichtung mit unterschiedlicher Nuttiefe, ebenfalls in Perspektive,

Fig. 4 ein drittes Ausführungsbeispiel der erfindungsgemäßen Vorrichtung für ein mit einem Gehäuse versehenes optoelektronisches Bauelement,

Fig. 5 ein viertes Ausführungsbeispiel der erfindungsgemäßen Vorrichtung in Perspektive,

Fig. 6 ein fünftes Ausführungsbeispiel der erfindungsgemäßen Vorrichtung,

Fig. 7 ein sechstes Ausführungsbeispiel der erfindungsgemäßen Vorrichtung zur Verbindung von zwei Lichtwellenleitern,

Fig. 8 die Vorrichtung der Fig. 7 mit aufgelegten Haltestücken,

Fig. 9 ein siebentes Ausführungsbeispiel der erfindungsgemäßen Vorrichtung,

Fig. 10 eine schematische Darstellung einer bei der Vorrichtung der Fig. 9 verwendeten Halteklammer und

Fig. 11 ein achtes Ausführungsbeispiel der erfindungsgemäßen Vorrichtung, bei der ein Träger mehrere Nuten aufweist.

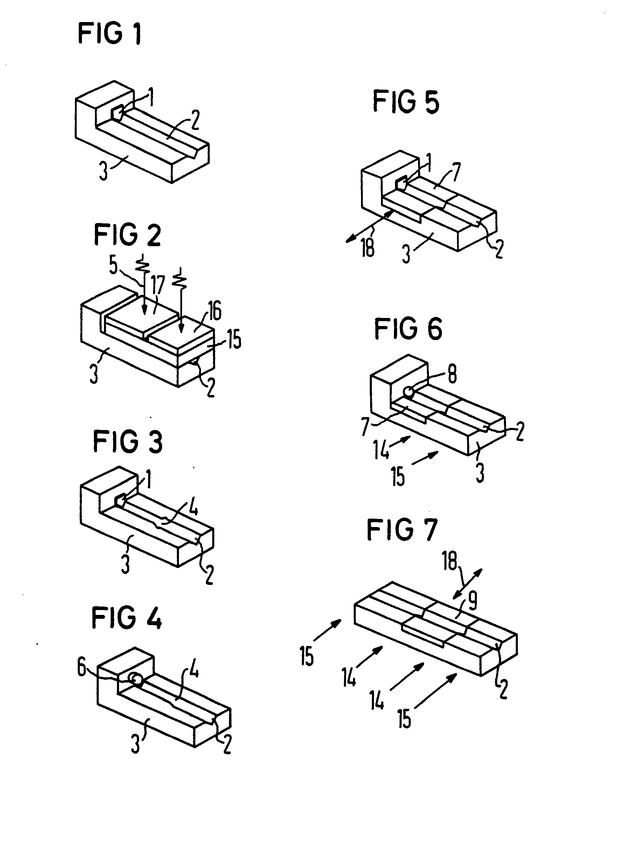

Fig. 1 zeigt einen beispielsweise aus Silicium bestehenden Träger 3, in den eine V-förmige Nut 2 eingebracht ist. Am Ende dieser Nut 2 befindet sich ein optoelektronisches Bauelement 1, beispielsweise eine Leuchtdiode. Dieses Bauelement 1 ist auf dem Träger 3 so festgelegt, daß seine aktive Fläche auf die Nut 2 ausgerichtet ist.

In die Nut 2 wird ein (nicht dargestellter) Lichtwellenleiter eingelegt, so daß seine Stirnfläche der aktiven Fläche des Bauelements 1 gegenüberliegt. Auf diese Weise kann der Lichtwellenleiter das vom Bauelement 1 (Leuchtdiode) abgestrahlte Licht aufnehmen und an eine andere Stelle übertragen.

Der Lichtwellenleiter wird in der Nut 2 durch eine Kunststoffschicht 15 festgelegt, die mittels Haltestücken 16, 17 gegen den Lichtwellenleiter bzw. die Oberfläche des Trägers 3 gepreßt wird. Als Kunststoffschicht kann ein Elastomer verwendet werden.

Die Haltestücke 16, 17 werden mittels Federkraft (vergleiche die Pfeile 5) festgelegt, so daß Temperaturschwankungen und dergleichen auch bei langer Einsatzdauer ausgeglichen werden.

Zum Einbauen des Lichtwellenleiters in der Nut 2 wird dieser zunächst in die Nut 2 eingelegt. Anschließend wird die erste Hälfte der Elastomerschicht 15 unterhalb des Haltestücks 17 aufgelegt. Sodann wird das Haltestück 17 angebracht und mit Federkraft beaufschlagt. Nach diesem Verfahrensschritt ist noch ein Justieren des Lichtwellenleiters in der Nut 2 möglich, da dieser in der Nut 2 nur mit seinem vorderen Ende mittels des Haltestücks 17 befestigt ist. Nach dem endgültigen Jusitieren des Lichtwellenleiters in der Nut 2 wird sodann die andere Hälfte der Kunstestoffschicht 15 zusammen mit dem Haltestück 16 aufgebracht.

Fig. 3 zeigt ein anderes Ausführungsbeispiel der erfindungsgemäßen Vorrichtung, bei dem die Nut 2 eine Stufe 4 aufweist. Mittels dieser Stufe 4 ist die Tiefe der Nut 2 an den Lichtwellenleiter angepaßt: In dem dem Bauelement 1 benachbarten Bereich der Nut 2 ist die Tiefe geringer, so daß dort die blanke Faser des Lichtwellenleiters eingelegt wird. In dem vom Bauelement 1 weiter entfernten Bereich ist die Tiefe der Nut 2 größer, so daß dort auch die Schutzhülle des Lichtwellenleiters aufgenommen werden kann. Mit anderen Worten, an der Stufe 4 endet die Schutzhülle des Lichtwellenleiters, so daß dem optoelektronischen Bauelement 1 lediglich die blanken Fasern des Lichtwellenleiters zugeführt werden.

Fig. 4 zeigt ein drittes Ausführungsbeispiel der erfindungsgemäßen Vorrichtung, bei der das optoelektronische Bauelement 1 zusätzlich mit einem Gehäuse 6 ausgestattet ist. Dieses Gehäuse 6 ist in dem der Nut 2 benachbarten Teil lichtdurchlässig, so daß Licht vom Lichtwellenleiter über das durchlässige Gehäuse 6 zum Bauelement 1 und umgekehrt übertragen werden kann.

In Fig. 5 ist ein weiteres Ausführungsbeispiel der erfindungsgemäßen Vorrichtung dargestellt, bei dem für die Nut 2 ein zusätzliches Teil 7 verwendet wird, das in den Träger 3 eingesetzt ist. Mittels dieses zusätlichen Teils 7 ist ein besonders genaues Justieren des Endes des Lichtleiters zur aktiven Fläche des Bauelements 1 möglich, da das Teil 7 in durch einen Doppelpfeil 18 angedeuteten Richtungen quer zur Längsachse der Nut 2 verschoben werden kann. Durch entsprechendes Positionieren des Teils 7 kann also das Ende des Lichtwellenleiters vollkommen exakt auf die aktive Fläche des Bauelements 1 ausgerichtet werden.

Fig. 6 zeigt eine Abwandlung des Ausführungsbeispiels der Fig. 5, wobei hier zusätzlich noch eine Linse 8 am Ende der Nut 2 vorgesehen ist, um beispielsweise das vom Bauelement 1 ausgesandte Licht auf die Stirnfläche des Lichtwellenleiters zu fokussieren.

Beim Ausführungsbeispiel der Fig. 6 hat der Lichtwellenleiter in einem Bereich 15, der weiter vom Bauelement 1 entfernt ist, ein etwas geringere Tiefe als im Bereich 14 in der Nähe des Bauelements 1, so daß der in die Nut 2 eingelegte Lichtwellenleiter sich selbst in der Nut 2 nach unten drückt, wobei keine unzulässige Beanspruchung auf den Lichtwellenleiter einwirkt.

Fig. 7 zeigt ein Ausführungsbeispiel der erfindungsgemäßen Vorrichtung zur Verbindung von zwei Lichtwellenleitern. Bei deisem Ausführungsbeispiel ist der die Verbindungsstelle der beiden Lichtwellenleiter aufnehmende Teil der Nut 2 in einem dem Teil 7 des Ausführungsbeispiels der Fig. 5 entsprechenden Teil verlegt, was die Justierung der beiden Lichtwellenleiter zueinander erleichtert.

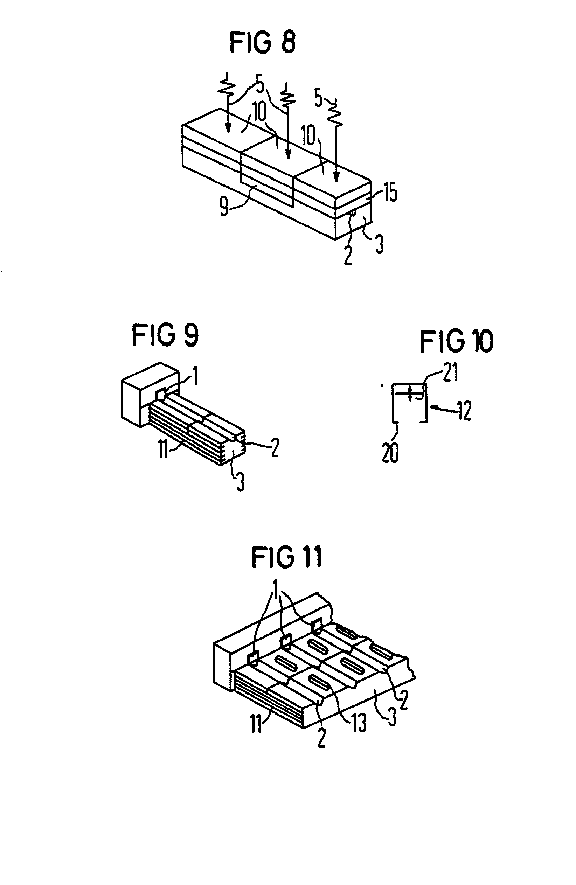

Fig. 8 zeigt, wie die Vorrichtung der Fig. 7 durch drei Kunststoffschichten 15 und drei entsprechende Haltestücke 10 abgedeckt werden kann, auf die jeweils eine Federkraft (vergleiche die Pfeile 5) einwirkt. Mittels dieser Kunststoffschichten 15 und dieser Haltestücke 10 werden die Lichtwellenleiter sicher in der Nut 2 miteinander gekoppelt.

In Fig. 9 ist ein Ausführungsbeispiel der erfindungsgemäßen Vorrichtung dargestellt, bei dem das Haltestück 3 in seinen Seitenflächen im Bereich der Nut 2 Längsrillen oder Riefen 11 aufweist, in die Enden 20 von U-förmigen Krallen 12 eingreifen können, in denen Haltefedern 21 untergebracht sind, die den Lichtwellenleiter in die Nut 2 drücken (vergleiche Fig. 10).

Fig. 11 zeigt schließlich ein Ausführungsbeispiel der erfindungsgemäßen Vorrichtung, bei der derartige Riefen 11 zusätzlich in verschiedenen Langlöchern 13 vorgesehen sind, so daß es mittels der Krallen 12 möglich ist, mehrere Lichtwellenleiter nebeneinander auf dem gleichen Träger 3 in einer sogenannten "Mehrfachanordnung" jeweils gegenüber einem optoelektronischen Bauelement 1 enden zu lassen.

## Patentansprüche

1. Vorrichtung zum gleichzeitigen Justieren und lösbaren Befestigen eines Lichtwellenleiters an ein optoelektronisches Bauelement (1) oder einen zweiten Lichtwellenleiter, die mit einem Träger (3) versehen sind, in den eine den Lichtwellenleiter aufnehmende V-förmige Nut (2) derart eingebracht ist, daß die Stirnfläche des Lichtwellenleiters für optimale Lichtübertragung der aktiven Fläche des Bauelements (1) oder der Stirnfläche des zweiten Lichtwellenleiters gegenüberliegt, dadurch gekennzeichnet, daß der Lichtwellenleiter durch zwei mit Kunststoff (15) beschichtete und unter Federkraft gelagerte Metallteile (16, 17) in der Nut (2) gehalten ist.

2. Vorrichtung nach Anspruch 1, dadurch gekennzeichnet, daß die Nut (2) entsprechend der blanken Faser des Lichtwellenleiters und dessen Schutzhülle abgestuft (vergleiche 4) ist.

3. Vorrichtung nach Anspruch 1, dadurch gekennzeichnet, daß der Kunststoff (15) ein Elastomer ist.

4. Vorrichtung nach einem der Ansprüche 1 bis 3, dadurch gekennzeichnet, daß der Träger (3) aus einem Siliziumkristall besteht.

5. Vorrichtung nach Anspruch 4, dadurch gekennzeichnet, daß der Siliziumkristall mit einer Metallisierung versehen ist.

6. Vorrichtung nach einem der Ansprüche 1 bis 5, dadurch gekennzeichnet, daß der Träger (3) mit einer hybriden und/oder integrierten Schaltung versehen ist.

7. Vorrichtung nach einem der Ansprüche 1 bis 6, dadurch gekennzeichnet, daß zwischen der aktiven Fläche und der Stirnfläche des Lichtwellenleiters eine Linse (8) vorgesehen ist.

8. Vorrichtung nach einem der Ansprüche 1 bis 7, dadurch gekennzeichnet, daß der Träger (3) mit Rillen (11) versehen ist, in die Krallen (12) von Haltestücken (21) eingreifen, welche den Lichtwellenleiter in der Nut (2) festlegen.

9. Vorrichtung nach Anspruch 8, dadurch gekennzeichnet, daß die Rillen in im Träger (3) vorgesehene Langlöcher (13) oder Rundlöcher eingebracht sind.

10. Vorrichtung nach Anspruch 8, dadurch gekennzeichnet, daß Rillen (11) auf den parallel zur Nut (2) verlaufenden Seitenflächen des Trägers (3) eingebracht sind.

11. Vorrichtung nach einem der Ansprüche 1 bis 10, dadurch gekennzeichnet, daß die Nut (2) mit schräg verlaufender Tiefe (vergleiche 14, 15) in den Träger (3) eingebracht ist.

## Revendications

1. Dispositif pour simultanément aligner et fixer de façon amovible un guide d'ondes optiques à un composant optoélectronique (1) ou à un second guide d'ondes optiques, qui sont équipés d'un support (3), dans lequel une gorge en V (2) logeant le guide d'ondes optiques est ménagé de telle sorte que la surface frontale du guide d'ondes optiques est située en vis-à-vis de la surface active du composant (1) ou de la surface frontale du second guide d'ondes optiques, pour une transmission optimale de la lumière, caractérisé par le fait que le guide d'ondes optiques est maintenu dans la gorge (2) par deux pièces métalliques (16, 17) recouvertes d'une matière plastique (15) et soumises à l'action d'une force élastique ou à celle d'un ressort.

2. Dispositif suivant la revendication 1, caractérisé par le fait que la gorge (2) est étagée (voir 4) d'une manière qui correspondant à la fibre nue du guide d'ondes optiques et à son enveloppe de protection.

3. Dispositif suivant la revendication 1, caractérisé par le fait que la matière plastique (15) est un élastomère.

4. Dispositif suivant l'une des revendications 1 à 3, caractérisé par le fait que le support (3) est constitué par un cristal de silicium.

5. Dispositif suivant la revendication 4, caractérisé par le fait que le cristal de silicium est pourvu d'une métallisation.

6. Dispositif suivant l'une des revendications 1 à 5, caractérisé par le fait que le support (5) est pourvu d'un circuit hybride et/ou d'un circuit intégré.

7. Dispositif suivant l'une des revendications 1 à 6, caractérisé par le fait qu'une lentille (8) est prévue entre la surface active et la surface frontale du guide d'ondes optiques.

8. Dispositif suivant l'une des revendications 1 à 7, caractérisé par le fait que le support (3) comporte des rainures (11), dans lesquelles s'engagent les griffes (12) d'éléments de retenue (21), qui fixent le guide d'ondes optiques dans la gorge (2).

9. Dispositif suivant la revendication 8, caractérisé par le fait que les rainures sont ménagées dans des trous allongés (13) ou des trous circulaires ménagés dans le support (3).

10. Dispositif suivant la revendication 8, caractérisé par le fait que les rainures (11) sont ménagées dans les faces latérales du support (3), parallèles à la gorge (2).

11. Dispositif suivant l'une des revendications 1 à 10, caractérisé par le fait que la gorge (2) est ménagée dans le support (3) de telle sorte que son fond est oblique (voir 14, 15).

## Claims

1. Device for the simultaneous adjustment and releasable fastening of an optical fiber to an optoelectronic component (1) or a second optical fiber, which are provided with a support (3) in which a V-shaped groove (2) receiving the optical fiber is made in such a way that the end face of the optical fiber lies opposite the active surface of the component (1) or the end face of the second optical fiber for optimum transmission of light, characterized in that the optical fiber is held in the groove (2) by two metal parts (16, 17) which are coated with plastic (15) and are mounted under spring force.

2. Device according to Claim 1, characterized in that the groove (2) is stepped (compare 4) in accordance with the bare fiber of the optical fiber and its protective covering.

3. Device according to Claim 1, characterized in that the plastic (15) is an elastomer.

4. Device according to one of Claims 1 to 3, characterized in that the support (3) is made of a silicon crystal.

5. Device according to Claim 4, characterized in that the silicon crystal is provided with a metallization.

6. Device according to one of Claims 1 to 5, characterized in that the support (3) is provided with a hybrid and/or integrated circuit.

7. Device according to one of Claims 1 to 6, characterized in that a lens (8) is provided between the active surface and the end face of the optical fiber.

8. Device according to Claims 1 to 7, characterized in that the support (3) is provided with grooves (11), into which the claws (12) of retaining elements (21) which fix the optical fiber in the groove (2) engage.

9. Device according to Claim 8, characterized in that the grooves are made in oblong holes (13) or round holes provided in the support (3).

10. Device according to Claim 8, characterized in that grooves (11) are made on the lateral faces of the support (3) which extend parallel to the groove (2).

11. Device according to one of Claims 1 to 10, characterized in that the groove (2) is made with an obliquely extending depth (compare 14, 15) in the support (3).

FIG 1

FIG 2

FIG 3

FIG 4

FIG 5

FIG 6

FIG 7

## FIG 8

## FIG 9

## FIG 10

## FIG 11